(19) Europäisches Patentamt
European Patent Office
Office européen des brevets

(11) Publication number: **0 486 835 A1**

# (12) EUROPEAN PATENT APPLICATION

(21) Application number: **91118107.1**

(51) Int. Cl.[5]: **C10M 159/16**

(22) Date of filing: **24.10.91**

(30) Priority: **19.11.90 US 615762**

(43) Date of publication of application:
**27.05.92 Bulletin 92/22**

(84) Designated Contracting States:
**BE DE GB NL**

(71) Applicant: **TEXACO DEVELOPMENT CORPORATION**
**2000 Westchester Avenue**
**White Plains, New York 10650(US)**

(72) Inventor: **Migdal, Cyril Andrew**
**10 Palmer Avenue**
**Croton-on-Hudson, New York 10520(US)**
Inventor: **Nalesnik, Theodore Eugene**
**19B Wildwood Manor**
**Wappingers Falls, New York 12590(US)**
Inventor: **Lucas, John Francis**
**RR2 Box 14**
**Campbell Hall, New York 10916(US)**
Inventor: **Benfaremo, Nicholas**
**2 Stenger Court**
**Wappingers Falls, New York 12590(US)**

(74) Representative: **Green, Mark Charles et al**
**Urquhart-Dykes & Lord, 91 Wimpole Street**
**London W1M 8AH(GB)**

## (54) Borated pre-coupled mono and/or bis-succinimide lubrication oil additives.

(57) A lubricating oil composition having improved dispersancy, rust inhibition and Viton seal compatibility. The dispersant being prepared by coupling two mono-alkenyl succinimides with an aldehyde and a phenol. The resulting coupled succinimide is then borated with borate containing compound to form a borated mannich phenol coupled mono-alkenyl succinimide.

EP 0 486 835 A1

This invention is related to lubricating oil additives, and more particularly to borated pre-coupled mono and/or bis-succinimide multi-purpose lubricating oil additives.

It is well known that internal combustion engines operate under a wide range of temperatures including low temperature stop-and-go- service as well as high temperature conditions produced by continuous high speed driving. Stop-and-go driving, particularly during cold, damp weather conditions, leads to the formation of a sludge in the crankcase and in the oil passages of a gasoline or a diesel engine. This sludge seriously limits the ability of the crankcase oil to effectively lubricate the engine. In addition, the sludge with its entrapped water tends to contribute to rust formation in the engine. These problems tend to be aggravated by the manufacturer's lubrication service recommendations which specify extended oil drain intervals.

It is known to employ nitrogen containing dispersants and/or detergents in the formulation of crankcase lubricating oil compositions. Many of the known dispersant/detergent compounds are based on the reaction of an alkenylsuccinic acid or anhydride with an amine or polyamine to produce an alkyl succinimide or an alkenylsuccinamic acid as determined by selected conditions of reaction.

It is also known to chlorinate alkenylsuccinic acid or anhydride prior to the reaction with an amine or polyamine in order to produce a reaction product in which a portion of the amine or polyamine is attached directly to the alkenyl radical of the alkenyl succinic acid or anhydride. The thrust of many of these processes is to produce a product having a relatively high level of nitrogen in order to provide improved dispersancy in a crankcase lubricating oil composition.

With the introduction of four cylinder internal combustion engines which must operate at relatively higher engine speeds or RPM's than conventional 6- and 8-cylinder engines in order to produce the required torque output, it has become increasingly difficult to provide a satisfactory dispersant lubricating oil composition.

Another problem facing the lubricant manufacturer is that of seal deteriorating in the engine. All internal combustion engines use elastomer seals, such as Viton seals, in their assembly. Over time, these seals are susceptible to serious deterioration caused by the lubricating oil composition. A lubricating oil composition that degrades the elastomer seals in an engine is unacceptable to engine manufacturers and has limited value.

Still, another problem for the manufacturers of lubricants is the rusting and corrosion of engine parts. Accordingly, a lubricant which tends to rust and/or corrode engine parts is unacceptable to engine manufacturers and is of little worth.

Thus, an object of the present invention is to provide a lubricating oil composition having dispersancy and rust inhibition.

Another object is to provide a lubricating oil composition which can withstand the stresses imposed by modern internal combustion engines.

A still further object is to provide a novel lubricating oil composition which does not degrade elastomer seals in internal combustion engines.

U. S. Patents 4,713,189 and 4,699,724 disclose a lubricating oil composition having improved dispersancy and viton seal compatibility. The dispersant being prepared by coupling two mono-alkenyl succinimides with an aldehyde and a phenol . The resulting coupled succinimide is then acylated with glycolic acid to form a glycolate Mannich phenol coupled mono-alkenyl succinimide.

U. S. Patent 4,636,322 discloses a lubricating oil composition having improved dispersancy and Viton seal compatibility. The dispersant being prepared by coupling partly glycolate succinimides with an aldehyde and a phenol.

U. S. Patents 3,172,892 and 4,048,080 disclose alkenylsuccinimides formed from the reaction of an alkyne succinic anhydride and an alkylene polyamine and their use as dispersants in a lubricating oil composition.

U.S. Patent 2,568,876 discloses reaction products prepared by reacting a monocarboxylic acid with a polyalkylene polyamine followed by a reaction of the intermediate product with an alkenyl succinic acid anhydride.

U. S. Patent 3,216,936 discloses a process for preparing an aliphatic amine lubricant additive which involves reacting an alkylene amine, a polymer substituted succinic acid and an aliphatic monocarboxylic acid.

U.S. Patent 3,131,150 discloses lubricating oil compositions containing dispersant-detergent mono- and dialkyl-succinimides or bis(alkenylsuccinimides).

Netherlands Patent 7,509,289 discloses the reaction product of an alkenyl succinic anhydride and an aminoalcohol, namely, a tris(hydroxymethyl) aminomethane.

U. S. Patent 4,338,205 discloses alkenyl succinimide and borated alkenyl succinimide dispersants for a lubricating oil with impaired diesel dispersancy in which the dispersant is treated with an oil-soluble strong

acid.

The present invention provides a novel additive which improves the dispersancy, rust inhibition and Viton seal compatibility of a lubricating oil. The lubricating oil composition comprises a major portion of a lubricating oil and a minor dispersant amount of a reaction product (i.e., lubricant additive) which may be prepared by

(a) reacting an amine with an alkenyl succinic acid anhydride to form a mono- and/or bis-alkenyl succinimide;

(b) adding a phenol and an excess of formaldehyde to said mono- and/or bisalkenyl succinimide to form a Mannich phenol coupled mono- and/or bis-alkenyl succinimide;

(c) borating said Mannich phenol coupled mono-and/or bis-alkenyl succinimide with a boron containing compound, thereby forming a Mannich phenol coupled borated mono and/or bis-alkenyl succinimide

In carrying out the present process, the reactants are step wise reacted with a long chain hydrocarbyl substituted dicarboxylic acid anhydride containing residual unsaturation in a "one pot reaction". The long chain hydrocarbon group is a ($C_2$-$C_{10}$) polymer, e.g., a ($C_2$-$c_5$) monoolefin, the polymer having a number average molecular weight (Mn) of about 500 to about 10,000.

Preferred olefin polymers for reaction with the unsaturated dicarboxylic acid anhydride or ester are polymers comprising a major molar amount of ($C_2$-$C_{10}$) polymer, e.g., a ($C_2$-$C_5$) monoolefin.

Such olefins include ethylene, propylene, butylene, isobutylene, pentane, 1-octane, styrene. The polymers can be homopolymers such as polyisobutylene, as well as copolymers of two or more of such olefins such as copolymers of: ethylene and propylene, butylene and isobutylene, propylene and isobutylene. Other copolymers include those in which a minor molar amount of the copolymer monomers e.g., 1 to 10 mole% is a ($C_4$-$C_{10}$) non-conjugated diolefln, e.g., a copolymer of isobutylene and butadiene; or a copolymer of ethylene, propylene and 1,4-hexadiene.

In some cases, the olefin polymer may be completely saturated, for example an ethylene-propylene copolymer made by a Ziegler-natta synthesis using hydrogen as a moderator to control molecular weight. In this case the alpha- or beta-unsaturated dicarboxylic acid anhydride is reacted with the saturated ethylene-propylene copolymer utilizing a radical initiator. The long chain hydrocarbyl substituted dicarboxylic acid producing material, e.g., acid or anhydride used in the invention includes a long chain hydrocarbon, generally a polyolefin, substituted typically with an average of at least about 0.8 per mole of polyolefin, of an alpha- or beta-unsaturated ($C_4$-$C_{10}$) dicarboxylic acid, anhydride or ester thereof, such as fumaric acid, itaconic acid, maleic acid, maleic anhydride, chloromaleic acid, dimethylfumarte chloromaleic anhydride, acrylic acid methacrylic acid, crotonic acid, cinnamic acid, and mixtures thereof.

The alkenyl succinic acid anhydride may be shown by the following formula:

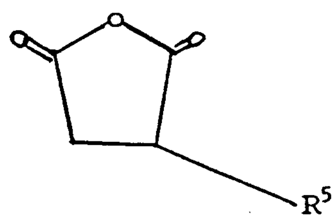

wherein the backbone polymer, $R^5$ has a number average molecular weight (Mn) ranging from about 500-10,000, preferably from about 1000-5000, and more preferably from about 200-2500.

The polyamine compositions which may be employed in practicing the present invention may include primary and/or secondary amines. The amines may typically be characterized by the formula

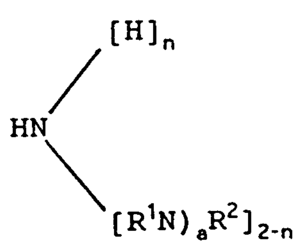

In this formula, a may be an integer of about 1 to about 8, preferably about 5; and may be 0 or 1; and n is O or 1. In the above compound, $R^2$ may be hydrogen or a hydrocarbon group selected from the group consisting of alkyl, aralkyl, cycloalkyl, aryl, alkaryl, alkenyl, and alkyl, including such radicals when inertly substituted. The preferred $R^2$ groups may be hydrogen or lower alkyl group, i.e. $C_1$-$C_{10}$ alkyl, groups including e.g., methyl, ethyl, n-propyl, ipropyl, butyls, amyls, hexyls, octyls, decyls, etc. $R^2$ may preferably be hydrogen. $R^1$ may be a hydrocarbon selected from the same group as $R^2$ subject to the fact that $R^1$ is hydrogen and $R^2$ is $-CH_2CH_2-$. Typical amines which may be employed may include those enlisted below
diethylenetriamine (DETA)
triethylenetetramine (TETA)
tetraethylenepentamine (TEPA)
pentaethylenehexamine (PEHA)

The aldehyde which may be employed may include those preferably characterized by the formula $R^3CHO$. In the preceding compound, $R^3$ may be hydrogen or a hydrocarbon group consisting of alkyl, aralkyl, cycloalkyl, aryl, alkyaryl, alkenyl, and alkynyl including such radicals when inertly substituted i.e. it may bear a non-reactive substituent such as alkyl, aryl, cycloalkyl, ether, halogen, nitro, etc. Typically inertly substituted R groups may include 3-chloropropyl, 2-ethoxyethyl, carboethoxymethyl, 4-methyl cyclohexyl, p-chlorophenyl, p-chlorobenzyl, 3-chloro-5-methylphenyl, etc. The preferred $R^3$ groups may be lower alkyl, i.e. $C_1$-$C_{10}$ alkyl, groups including methyl, ethyl, n-propyl, isopropyl, butyls, amyls, hexyls, octyls, decyls, etc. $R^3$ may preferably be hydrogen.

Typical aldehydes which may be employed may include those listed below
formaldehyde
ethanal
propanal
butanal etc.

The phenols which may be employed in practice of the process of this invention may preferably be characterized by the formula $HR^4OH$. It is a feature of these phenols that they contain an active hydrogen which will be a site for substitution. Poly-phenols (eg compounds containing more than one hydroxy group in the molecule whether on the same ring or not) may be employed. The rings on which the hydroxy groups are situated may bear inert substituents. However, at least two positions e.g. ortho- and para-, to a phenol hydroxy group, must be occupied by an active hydrogen as this is the point of reaction with the iminium salt group, $R^4$ may be an arylene group typified by $-C_6H_4-$, $-C_6H_3(CH_3)-$, or $-C_6H_3(C_2H_5)-$.

Typical phenols which may be employed may include those listed below The preferred phenols may be phenol or mono-nonylphenol.
Phenol
Bisphenol A
Resorcinol
Mono-nonylphenol
Beta-naphthol

The secondary amine groups of the polyalkenylamine moiety in said coupled bis-alkenyl succinimide are reacted with a borating agent selected from the group consisting of boric acid, boron oxide, boron halide, and a boron acid ester, to provide a borated derivative thereof.

The lubricating oil of the invention may contain the novel reaction product in a concentration ranging from about 0.1 to 30 weight percent. A concentration range for the additive ranging from about 0.5 to 15 weight percent based on the total weight of the oil composition is preferred with a still more preferred concentration range being from about 1 to 8.0 weight percent.

Oil concentrates of the additives may contain from about 1 to 75 weight percent of the additive reaction product in a carrier or diluent oil of lubricating oil viscosity.

The novel reaction product of the invention may be employed in lubricant compositions together with conventional lubricant additives. Such additives may include additional dispersants, detergents, antioxidants, pour point depressants, anti-wear agents and the like.

The novel additive reaction product of the invention was tested for its effectiveness as a dispersant and as a rust inhibitor in a fully formulated lubricating oil composition.

The above process and products are illustrated in the following non-limiting Examples:

## EXAMPLE 1

### Preparation Of Borated Mannich Phenol Coupled Mono- And/Or Bis-Alkenyl Succinimide Dispersant

A solution of polyisobutenylsuccinic acid anhydride (3665.0 g, 1.1 moles, PIBSA prepared from an approximately 2060 mol. wt. polybutene) in diluent oil (3360.0 g) was charged into a twelve liter 3-neck flask equipped with a mechanical stirrer, thermometer, thermocouple, and nitrogen inlet and heated to 60° C. Next triethylenetetramine (90.2 g, 0.62 moles) was added and the heat was increased to 120°C and maintained for 2.0 hours. Then nonylphenol (67.9 g, 0.31 moles) was added, followed by a 37% solution of formaldehyde (100.2 g, 1.24 moles). The temperature was maintained at 120°C for 0.5 hours. Next boric acid (30.6 g, 0.49 moles) was added and the temperature was raised to 160°C and then maintained for 4 hours to drive off water. The hot mixture (~100°C) was filtered through diatomaceous earth filter aid. The product (an approximately 50% concentrate) analyzed as follows: % N = 0.50 (0.48 calc.), % B = 0.055 (0.070 calc.), Total Acid Number (TAN) = 1.5, and Total Base Number (TBN) = 10.4.

EXAMPLE 2

Preparation Of Borated Mannich Phenol Coupled Mono- And/Or Bis-Alkenyl Succinimide Dispersant With Pale Oil Added At Reaction Completion

Polyisobutenylsuccinic acid anhydride (3000.0 g, 2.2 moles, PIBSA prepared from an approximately 920 mol. wt. polybutene) was charged into a twelve liter 3-neck flask equipped with a mechanical stirrer, thermometer, thermocouple, and nitrogen inlet and heated to 60°C. Next triethylenetetramine (177.4 g, 1.2 moles) was added and the heat was increased to 120 C and maintained for 2.0 hours. Then nonylphenol (133.6 g, 0.61 moles) was added, followed by a 37% solution of formaldehyde (197.0 g, 2.4 moles). The temperature was maintained at 120°C for 0.25 hours, then the temperature was raised to 160°C and maintained for 2 hours, it was cooled to 150°C. Next boric acid (67.3 g, 1.1 moles) was added and the temperature was maintained at 150°C for 3 hours to drive off water. Then 100 P pale oil was added (1230.0 g) and the mixture stirred until homogenous (0.5 hours). The hot mixture (~100°C) was filtered through diatomaceous earth filter aid. The product (an approximately 50% concentrate) analyzed as follows: % N = 1.48 ( 1.50 calc.), % B = 0.16 (0.25 calc.), Total Acid Number (TAN) = 4.3, and Total Base Number (TBN) = 22.1.

EXAMPLE 3

Preparation Of Borated Mannich Phenol Coupled Mono- And/Or Bis-Alkenyl Succinimide Dispersant Utilizing Paraformaldehyde And With Pale Oil Added At Reaction Completion

Polyisobutenylsuccinic acid anhydride (3000.0 g, 2.2 moles, PIBSA prepared from an approximately 920 mol. wt. polybutene) was charged into a twelve liter 3-neck flask equipped with a mechanical stirrer, thermometer, thermocouple, and nitrogen inlet and heated to 60°C. Next triethylenetetramine (177.4 g, 1.2 moles) was added and the heat was increased to 120°C and maintained for 2.0 hours. Then nonylphenol (133.6 g, 0.61 moles) was added, followed by paraformaldehyde (72.9 g, 2.4 moles). The temperature was maintained at 120°C for 0.25 hours, then the temperature was raised to 160°C and maintained for 2 hours. Next boric acid (67.3 g, 1.1 moles) was added and the temperature was maintained at 160°C for 2.5 hours to drive off water. Then 100 P pale oil was added (1230.0 g) and the mixture stirred until homogenous (0.5 hours). The hot mixture (~100°C) was filtered through diatomaceous earth filter aid. The product (an approximately 50% concentrate) analyzed as follows: % N = 1.28 (1.50 calc.), % B = 0.22 (0.25 calc.), Total Acid Number (TAN) = 4.2, and Total Base Number (TBN) = 21.1.

EXAMPLE 4

Preparation Of Borated Mannich Phenol Coupled Mono- And/Or Bis-Alkenyl Succinimide Dispersant With Pale Oil Added At Reaction Completion

Polyisobutenylsuccinic acid anhydride (3665.0 g, 1.1 moles, PIBSA prepared from an approximately 2060 mol. wt. polybutene) was charged into a twelve liter 3-neck flask equipped with a mechanical stirrer, thermometer, thermocouple, and nitrogen inlet and heated to 60°C. Next triethylenetetramine (90.2 g, 0.62 moles) was added and the heat was increased to 120°C and maintained for 2.0 hours. Then nonylphenol (67.9 g, 0.31 moles) was added, followed by a 37% solution of formaldehyde (100.2 g, 1.24 moles). The temperature was maintained at 120°C for 0.5 hours, then the temperature was raised to 140°C and maintained for 2 hours. Next boric acid (152.8 g, 2.47 moles) was added and the temperature was raised to

150°C and then maintained for 3 hours to drive off water. Then 100 P pale oil was added (3446.9 g) and the mixture stirred until homogenous. The hot mixture (~100°C) was filtered through diatomaceous earth filter aid. The product (an approximately 50% concentrate) analyzed as follows: % N=0.43 (0.47 calc.), % B=0.038 (0.036 calc.), Total Acid Number (TAN)=1.0, and Total Base Number (TBN)= 6.3.

## EXAMPLE 5

### Preparation Of Borated Mannich Phenol Coupled Mono- And/Or Bis-Alkenyl Succinimide Dispersant With Pale Oil Added At Start Of Reaction

A solution of polyisobutenylsuccinic acid anhydride (3665.0 g, 1.1 moles, PIBSA prepared from an approximately 2060 mol. wt. polybutene) in diluent oil (3446.9 g) was charged into a twelve liter 3-neck flask equipped with a mechanical stirrer, thermometer, thermocouple, and nitrogen inlet and heated to 60°C. Next triethylenetetramine (90.2 g, 0.62 moles) was added and the heat was increased to 120°C and maintained for 2.0 hours. Then nonylphenol (67.9 g, 0.31 moles) was added, followed by a 37% solution of formaldehyde (100.2 g, 1.24 moles). The temperature was maintained at 120°C for 0.5 hours. Next boric acid (30.6 g, 0.49 moles) was added and the temperature was raised to 160°C and then maintained for 4 hours to drive off water. The hot mixture (~100°C) was filtered through diatomaceous earth filter aid. The product (an approximately 50% concentrate) analyzed as follows: % N=0.52 (0.47 calc.), % B=0.039 (0.036 calc.), Total Acid Number (TAN)=1.8, and Total Base Number (TBN)=6.0.

## EXAMPLE 6

### Preparation Of Borated Mannich Phenol Coupled Mono- and/or Bis-Alkenyl Succinimide Dispersant

A solution of polyisobutenylsuccinic acid anhydride (3965.0 g, 1.0 moles, PIBSA prepared from an approximately 2060 mol. wt. polybutene) in diluent oil (2124.0 g) was charged into a twelve liter 3-neck flask equipped with a mechanical stirrer, thermometer, thermocouple, and nitrogen inlet and heated to 60 C. Next triethylenetetramine (80.3 g, 0.55 moles) was added and the heat was increased to 120°C and maintained for 2.0 hours. Then nonylphenol (59.4 g, 0.27 moles) was added, followed by a 37% solution of formaldehyde (89.2 g, 1.10 moles). The temperature was maintained at 120°C for 0.5 hours. Next boric acid (27.1 g, 0.44 moles) was added and the temperature was raised to 160°C and then maintained for 4 hours to drive off water. The hot mixture (~100°C) was filtered through diatomaceous earth filter aid. The product (an approximately 50% concentrate) analyzed as follows: % N=0.41 (0.48 calc.), % B=0.048 (0.070 calc.), and Total Acid Number (TAN)=1.2.

## EXAMPLE 7

### Sequence VE Gasoline Engine Test Results

The ASTM Sequence VE gasoline engine test is used to evaluate the performance of gasoline engine oils in protecting engine parts from sludge and varnish deposits and valve train wear due to low temperature "stop and go" operation. The test uses a Ford 2.3 L four-cylinder Ranger truck engine. The engine is cycled through three test stages, requiring four hours to complete, for 288 hours or 72 cycles. The Sequence VE gasoline engine test results shown below were run in a multigrade fully formulated motor oil.

Sequence VE Gasoline Engine Test Results

| Dispersant | AS[1] | AV | RACS | PSV | % ORC | % OSC | $CLW_{avg}$ | $CLW_{max}$ |
|---|---|---|---|---|---|---|---|---|
| Example[2] 1 | 9.4 | 6.6 | 9.4 | 6.9 | 0.0 | 1.0 | .6 | 0.9 |
| Example[3] 2 | 9.4 | 5.9 | .1 | 6.5 | 8.3 | .3 | 1.0 | 8.0 |
| Limits | $9.0_{min}$ | $5.0_{min}$ | $7.0_{min}$ | $6.5_{min}$ | $15.0_{max}$ | $20.0_{max}$ | $5_{max}$ | $15_{max}$ |

[1]AS, AV, RACS, PSV, ORC, OSC, $CLW_{avg}$, and $CLW_{max}$ denote: average sludge, average varnish, rocker arm cover sludge, piston skirt varnish, oil ring clogging, oil screen clogging, cam lobe wear average, and cam lobe wear maximum, respectively.

[2]10W-40 fully formulated motor oil

[3]10W-30 fully formulated motor oil

## EXAMPLE 8

### Sequence IID Gasoline Engine Oil Test

The ASTM Sequence IID test is used to evaluate the performance of an oil in protecting critical engine parts from rust and corrosion in short trip, cold weather service. If an engine is not fully warmed up, fuel and water condense in the oil, leading to formation of various corrosives that can attack engine parts if not protected by the engine oil's additive system. The Sequence IID test uses a 5.7 liter 1977 Oldsmobile V-8 engine. The test is run in three stages for a total of 32 hours. It operates mostly at low speed and low temperatures to simulate short trip service during the winter. The Sequence IID test results shown below were run in multigrade fully formulated motor oil.

**Sequence IID Gasoline Engine Test Results**

| Dispersant | AER[1] | LS |
|---|---|---|
| Example[2] 1 | 8.8 | none |
| Example[3] 2 | 8.6 | none |
| SG Limits | $8.5_{min}$ | none |

[1]AER and LS denote: Average Engine Rust and Lifter sticking, respectively

[2]10W-40 fully formulated motor oil
[3]10W-30 fully formulated motor oil

EXAMPLE 9

Viton Seal Compatibility

The test described below is designed to test the Viton seal compatibility for a crankcase lubricating oil composition containing a nitrogen-containing dispersant. The Viton AK-6 seal is soaked at 150°C for 168 hours in the oil being tested. The elastomer to oil ratio is 1/80. Then the sample is tested for percent change in elongation, percent change in tensile strength, and the degree of cracking. The dispersant is in the oil formulation at 5.5 weight percent. The results are provided below

**Viton Seal Compatibility Test Results**

| | Example 6 | Limits |
|---|---|---|
| % Change in Tensile Strength | -14.3 | +/-20 max |
| % Change in Elongation | -17.8 | +/-25 max |
| Cracks at 120% Elongation | none | none |

**Claims**

**1.** A process for the production of a lubricating oil additive comprising:
(a) reacting an amine with an alkenyl succinic acid anhydride to form a mono- and/or bis-alkenyl succinimide;
(b) adding a phenol and an excess of aldehyde to said mono- and/or bis-alkenyl succinimide to form a Mannich phenol coupled mono- and/or bis-alkenyl succinimide;
(c) borating said Mannich phenol coupled mono- and/or bis-alkenyl succinimide with a boron containing compound, thereby forming a Mannich phenol coupled borated mono- and/or bis-alkenyl

succinimide.

**2.** A process according to Claim 1, wherein said boron containing compound is selected from boric acid, a boric ester, boron oxide and a boron halide.

**3.** A process according to Claim 1 or Claim 2 wherein said borating is carried out at from 150°C to 175°C.

**4.** A process according to any one of Claims 1 to 3 wherein said amine is represented by the formula

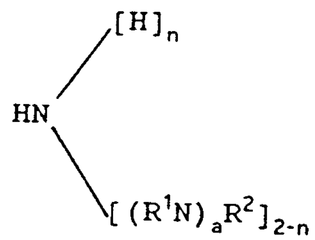

where $R^2$ is H or a hydrocarbon selected from alkyl, alkalyl, cycloalkyl, aryl, alkaryl, alkenyl and alkynyl; $R^1$ is a hydrocarbon selected from the same group as $R^2$ except that $R^1$ contains one less H; a is an integer of from 1 to 8; and n is 0 or 1.

**5.** A process according to Claim 4, wherein said amine is selected from diethylenetriamine, triethylenetetramine, tetraethylenepentamine and pentaethylenehexamine.

**6.** A process according to any one of Claims 1 to 5, wherein said aldehyde is formaldehyde, paraformaldehyde, ethanal, propanal or butanal.

**7.** A process according to any one of Claims 1 to 6, wherein said phenol is selected from the group consisting of phenol, bisphenol A, resorcinol, and beta-naphthol.

**8.** A process according to Claim 7, wherein said phenol is 4-nonylphenol.

**9.** A process according to any one of Claims 1 to 8, wherein said alkenyl succinic acid anhydride has a number average molecular weight of 500 to 10,000.

**10.** A lubricating oil composition comprising a major portion of a lubricating oil and a minor amount of an oil additive prepared according to any one of Claims 1 to 9.

European Patent Office

# EUROPEAN SEARCH REPORT

Application Number

EP 91 11 8107

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| D,Y | US-A-4 699 724 (T.E NALESNIK)<br>* column 7, line 43; claims 1-3,8,10,12 * | 1-10 | C10M159/16 |
| Y | FR-A-1 559 643 (STANDARD OIL COMPANY)<br>* page 2, right column, line 5 - line 15 *<br>* page 4, line 25 - line 46 * | 1-10 | |
| P,A | US-A-4 981 492 (D.A BLAIN)<br>* column 1, line 65 - column 3, line 17 * | 1-6,9,10 | |
| A | WORLD PATENTS INDEX LATEST<br>Week 8719,<br>Derwent Publications Ltd., London, GB;<br>AN 87-133766<br>RD276007 (ANONYMOUS) 10 April 1987<br>* abstract * | 1,2,6,7,<br>9,10 | |
| | | | TECHNICAL FIELDS SEARCHED (Int. Cl.5 ) |
| | | | C10M<br>C08F<br>C07D<br>C08G |

The present search report has been drawn up for all claims

| Place of search | Date of completion of the search | Examiner |
|---|---|---|
| THE HAGUE | 07 JANUARY 1992 | HILGENGA K.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)